# EUROPÄISCHE PATENTSCHRIFT

(11) **EP 3 940 286 B1**
(45) Veröffentlichungstag und Bekanntmachung des Hinweises auf die Patenterteilung: **13.09.2023**
(21) Anmeldenummer: 21176294.3
(22) Anmeldetag: 27.05.2021
(51) Int. Cl.: F16P 3/08, H02B 1/26, B30B 9/30

(54) **BALLENPRESSE MIT EINEM SCHALTSCHRANK UND EINER ZUSATZSTROMVERSORGUNG**
BALER WITH A SWITCH CABINET AND AN AUXILIARY POWER SUPPLY
PRESSE À BALLES DOTÉE D'UNE ARMOIRE DE COMMANDE ET D'UNE ALIMENTATION SUPPLÉMENTAIRE

(30) Priorität: 14.07.2020 DE 102020118572
(43) Veröffentlichungstag der Anmeldung: 19.01.2022
(73) Patentinhaber: Unotech GmbH, 49779 Niederlangen (DE)
(72) Erfinder: Telscher, Thomas, 49078 Osnabrück (DE)
(74) Vertreter: Lenzing Gerber Stute

(56) Entgegenhaltungen:
- US-A1- 2007 101 873
- US-B2- 8 514 054

## Beschreibung

Die vorliegende Erfindung betrifft eine Ballenpresse mit einem Schaltschrank und einer Zusatzstromversorgung mit den Merkmalen der Oberbegriffe der Ansprüche 1 und 12. In sicherheitsrelevanten Arbeitsbereichen von Maschinen, insbesondere mit rotierenden und/ oder anderweitig Kraft aufwendenden Maschinenteilen, passieren Unfälle infolge menschlichen Versagens häufig dadurch, dass die Maschinen zuvor nicht stromlos geschaltet wurden oder während einer Wartung versehentlich mit Strom beaufschlagt und in Betrieb gesetzt werden. In anderen Fällen bestehen Sicherheitsrisiken auch darin, dass von den Bedienern der Maschinen vorsätzlich sicherheitsrelevante Stromkreise überbrückt werden, um trotz vorschriftsmäßig abgeschalteter Stromversorgung ähnlich wie im laufenden Arbeitsbetrieb Wartungen, Reparaturen oder Ähnliches an der Maschine vorzunehmen. Durch derartige Handlungen besteht eine akute Gefahr für den Maschinenbediener und andere Personen, die sich im Gefahrenbereich befinden. Deshalb ist es seitens des Maschinenherstellers geboten, entsprechende Sicherheitsvorkehrungen zu schaffen, damit solche verbotswidrigen Umgehungen der Sicherheitseinrichtungen möglichst unmöglich gemacht werden.

Auch bei Arbeiten an elektrischen Schaltschränken, in denen elektrische Bauteile verbaut sind, die mit hohen elektrischen Spannungen und Strömen betrieben werden, kann Lebensgefahr durch die Möglichkeit eines elektrischen Schlags bestehen, wenn bei geöffnetem Schaltschrank die elektrischen Schaltungen, die hohe elektrische Spannungen und Ströme führen, nicht stromlos geschaltet sind.

Andererseits ist es zur Wartung und Fehlerdiagnose erforderlich, die in dem Schaltschrank befindliche Steuerungselektronik mit Strom zu versorgen, damit zum Beispiel Diagnoseprogramme ausgeführt werden können und die Signale von Sensoren und Schaltern abgefragt werden können. Bislang wurde für solche Arbeiten - trotz akuter Gefahr eines elektrischen Schlags - kurzerhand die Hauptstromversorgung wieder eingeschaltet.

Aus der DE 10 2006 006 949 B4 ist ein Sicherheitssystem zum Überwachen des Zustandes einer Schutzeinrichtung mit einer Sicherheitseinrichtung bekannt. Die DE 10 2009 048 743 A1 beschreibt einen Sicherheitsschalter mit Zuhaltung und Fluchtentriegelung. In der EP 0 913 898 A1 ist ein Sicherheits-Türschließsystem für Schaltschränke offenbart, welches einen Betrieb des Schaltschranks bei geöffneter Schranktür verhindert. Diese Systeme ermöglichen es nicht, bei geöffnetem Schaltschrank die darin angeordnete Elektronik und Steuerung zu betreiben, ohne dass die Gefahr einer versehentlichen oder absichtlichen Inbetriebsetzung der damit gesteuerten Maschine, insbesondere einer Ballenpresse, besteht. US 2007/101873 zeigt eine Ballenpresse mit einem Trapped-Key-System gemäß dem Oberbegriff der Ansprüche 1 und 12.

Es ist deshalb Aufgabe der vorliegenden Erfindung, eine Ballenpresse und ein Sicherheitssystem für eine Ballenpresse zu schaffen, bei der in elektrisch sicherem Zustand die Steuerungselektronik, gegebenenfalls unter Einbeziehung von externen Sensoren und Schaltern, betrieben und gewartet werden kann. Insbesondere soll die Inbetriebsetzung der Maschine selbst bei geöffnetem Schaltschrank weitestgehend unmöglich gemacht werden. Die beschriebenen Aufgaben werden erfindungsgemäß durch eine Ballenpresse und ein Sicherheitssystem für eine Ballenpresse mit den Merkmalen der Ansprüche 1 und 12 gelöst.

Weil bei einer Ballenpresse mit einem Schaltschrank mit einer Hauptstromversorgung, einem Hauptschalter und einem Sicherheitsschlüsselsystem mit einem Hauptschlüssel, wobei der Hauptschlüssel dem Hauptschalter zugeordnet ist und nur bei ausgeschaltetem, offenem Hauptschalter und dadurch ausgeschalteter Hauptstromversorgung entnehmbar ist, wobei wenigstens ein nur bei eingestecktem Hauptschlüssel entnehmbarer Nebenschlüssel vorgesehen ist, der

zum Öffnen einer Schaltschranktür erforderlich ist, so dass ein Hauptstromkreis mit der Hauptstromversorgung des Schaltschranks vor dem Öffnen des Schaltschranks zwangsläufig unterbrochen ist, und über einen in dem Schaltschrank vorgesehenen Kontaktschalter ein Zusatzstromkreis mit einer Zusatzstromversorgung einschaltbar ist, der die innen liegende Elektrik und Steuerungselektronik des Schaltschranks mit Strom versorgt, werden lebensbedrohliche Gefahrensituationen bei Arbeiten an der innen liegenden Elektrik des Schaltschranks wirkungsvoll verhindert, aber gleichzeitig ein gefahrloses Testen dieser Elektrik weiterhin ermöglicht. Weil die innen liegende Elektrik und Steuerungselektronik des Schaltschranks nur alternativ in dem Betriebszustand bei geschlossener Schaltschranktür mit der Hauptstromversorgung oder in dem Diagnosezustand bei geöffneter Schaltschranktür mit der Zusatzstromversorgung betrieben werden kann, ist der Betriebszustand bei geöffneter Schaltschranktür und somit auch die Gefahr eines elektrischen Schlags ausgeschlossen.

Wenn der mehrphasige Hauptstromkreis mit der Hauptstromversorgung und dem Hauptschalter die innen liegende Elektrik und Steuerungselektronik des Schaltschranks in einem Betriebszustand betreibt, kann der Bediener der Ballenpresse auf die innen liegende Elektrik des Schaltschranks nicht direkt zugreifen.

Wenn durch den Zusatzstromkreis mit der Zusatzstromversorgung und dem Kontaktschalter die innen liegende Elektrik und Steuerungselektronik des Schaltschranks mit Strom niedriger Spannung und vorzugsweise begrenzter Stromstärke in einem Diagnosezustand betrieben wird, kann der Bediener der Ballenpresse und das Servicepersonal die innen liegende Elektrik und Steuerungselektronik des Schaltschranks gefahrlos auf ihre Funktion hin testen und hat gefahrlosen direkten Zugriff darauf.

In einer vorteilhaften Ausführungsform ist die Zusatzstromversorgung als Netzstromquelle mit niedriger Ausgangsspannung von beispielsweise 48 Volt und begrenzter Stromstärke ausgeführt. Dadurch ist eine dauerhafte Zusatzstromversorgung in dem Diagnosebetrieb sichergestellt.

In einer weiteren vorteilhaften Ausführungsform ist die Zusatzstromversorgung als Batterie bzw. Akkumulator ausgeführt. Dadurch kann die Zusatzstromversorgung vollständig innerhalb des Schaltschranks installiert werden.

Wenn bei offenem Hauptschalter die Hauptstromversorgung ausgeschaltet ist, kann der Hauptschlüssel entnommen werden. Weil bei geschlossenem Hauptschalter der Hauptschlüssel nicht entnehmbar ist, kann die Schaltschranktür nicht in dem Betriebszustand geöffnet werden.

Weil bei entnommenem Hauptschlüssel der Hauptschalter nicht einschaltbar ist, kann bei geöffneter Schaltschranktür die Ballenpresse nicht in Betrieb genommen werden.

Weil durch Betätigung des Kontaktschalters die Zusatzstromversorgung ein- und ausgeschaltet wird, kann der Schaltschrank der Ballenpresse bei geöffneter Schaltschranktür in dem Diagnosezustand betrieben werden.

Weil der Zusatzstromkreis durch Schließen der Schaltschranktür wieder geöffnet wird, kann die Ballenpresse nur alternativ in dem Betriebszustand oder dem Diagnosezustand betrieben werden.

Wenn der Kontaktschalter an der inneren Oberseite des Schaltschranks angebracht ist, kann dieser nicht versehentlich, zum Beispiel durch unbeabsichtigte Berührung mit dem Fuß des Bedieners, betätigt werden.

Weil der Betriebszustand der innen liegende Elektrik und Steuerungselektronik mit Stromversorgung durch den Hauptstromkreis nur bei geschlossener Schaltschranktür hergestellt werden kann, sind Arbeiten durch den Bediener unter Gefahr eines elektrischen Schlags an der innen liegenden Elektrik in dem Betriebszustand der Ballenpresse nicht möglich.

Weil nur nach dem Ausschalten des Hauptstromkreises mit der Hauptstromversorgung durch den Hauptschalter der Hauptschlüssel entnommen wird und mit dem Hauptschlüssel mindestens ein Nebenschlüssel entnommen wird, mit dem die Schaltschranktür geöffnet wird, ist ein gefahrloses Arbeiten an der innen liegenden Elektrik des Schaltschranks in dem Diagnosezustand möglich.

Wenn nach Öffnen des Schaltschranks mittels des Kontaktschalters der Zusatzstromkreis eingeschaltet wird, der die innen liegende Elektrik und Steuerungselektronik in dem Diagnosezustand betreibt, kann diese gefahrlos getestet werden.

Die vorliegende Erfindung beschreibt eine Ballenpresse mit einem Schaltschrank und einer zusätzlichen Zusatzstromversorgung, wobei ein Sicherheitssystem einen Zustand derart, dass die im Schaltschrank angeordnete Steuerung und die innen liegende Elektrik bei geöffneter Schaltschranktür mit Betriebsstrom beaufschlagt ist, unmöglich macht. Gleichzeitig sind aber gefahrlose Wartungs-, Reparaturarbeiten und dergleichen bei geöffneter Schaltschranktür möglich. Der Schaltschrank kann in einen Diagnosezustand versetzt werden, in welchem die innen liegende Elektrik und Steuerungselektronik des Schaltschranks der Ballenpresse mit einer Zusatzstromversorgung betrieben und gefahrlos auf ihre Funktion hin getestet werden kann. Durch eine in den Schaltschrank integrierte Zusatzstromversorgung mit niedriger Spannung und vorzugsweise einer Strombegrenzung können die im Schaltschrank befindlichen elektrischen Schaltungen und die externen Sensoren und Schalter zusätzlich mit einem ungefährlichen Teststrom betrieben werden, sodass diverse Tests an der Steuerung vorgenommen werden können.

Ein Ausführungsbeispiel der Erfindung wird nachfolgend anhand der Zeichnungen näher erläutert. Gleiche bzw. funktionsgleiche Bauteile sind dabei figurübergreifend mit denselben Bezugszeichen versehen. Es zeigen:
- Figur 1:: eine schematische Darstellung eines Sicherheitssystems für einen Schaltschrank bei geschlossener Schaltschranktür in einem Betriebszustand;
- Figur 2:: eine schematische Darstellung eines Sicherheitssystems für einen Schaltschrank bei geöffneter Schaltschranktür mit einer innen liegenden Zusatzstromversorgung in einem Diagnosezustand; sowie
- Figur 3:: ein schematisches, vereinfachtes Blockschaltbild einer erfindungsgemäßen Steuerung mit Hauptstromversorgung und Zusatzstromversorgung in dem Diagnosezustand.

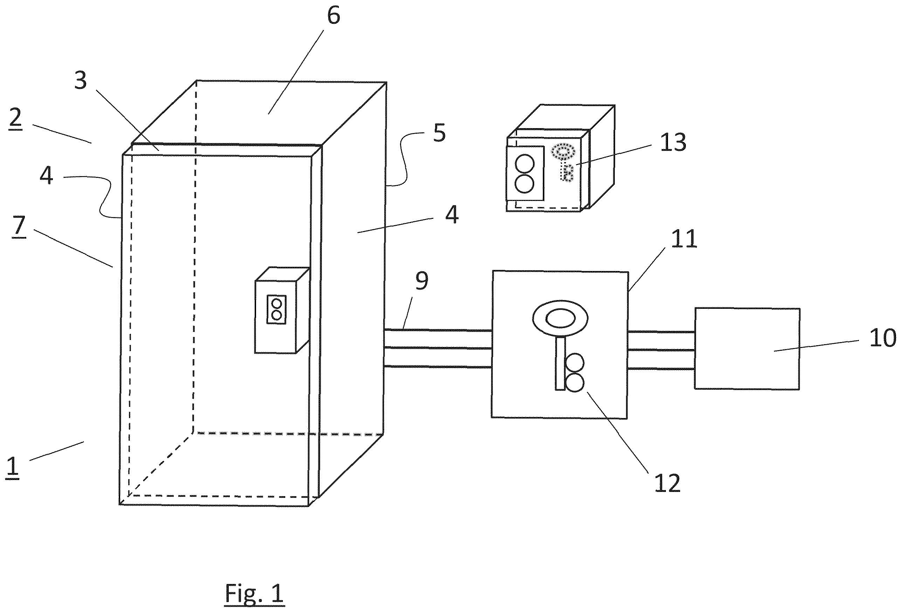

In Figur 1 ist schematisch ein Sicherheitssystem für einen Schaltschrank 1 dargestellt. Der Schaltschrank 1 umfasst ein Gehäuse 2 mit einer Wandung 3, Seitenwänden 4, einer Rückwand 5 und einer oberen Deckenwandung 6. Vorderseitig ist der Schaltschrank 1 mit einer schwenkbaren Schaltschranktür 7 verschlossen. Die Figur 1 zeigt den Schaltschrank 1 in einem normalen Betriebszustand, in dem die Schaltschranktür 7 geschlossen und verriegelt ist.

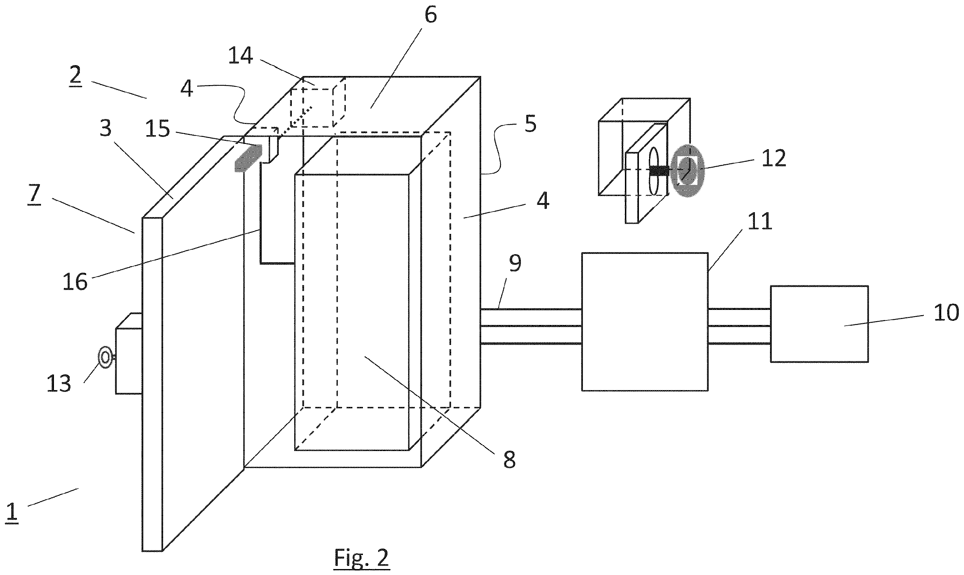

In dem Schaltschrank 1 ist eine innen liegende Elektrik und Steuerungselektronik 8 (Fig. 2) angeordnet, die im Betriebszustand über einen Hauptstromkreis 9 von einer mehrphasigen Hauptstromversorgung 10 versorgt wird. Die mehrphasige Hauptstromversorgung 10 wird beispielsweise durch die Seitenwände 4 oder die obere Deckenwandung 6 in das Innere des Schaltschranks 1 geführt. Die mehrphasige Hauptstromversorgung 10 ist beispielsweise an den Seitenwänden 4 des Gehäuses 2 des Schaltschranks 1 angebracht. Durch einen geschlossenen Hauptschalter 11 ist der Hauptstromkreis 9 geschlossen. Ein Hauptschlüssel 12 ist dem Hauptschalter 11 zugeordnet und nur bei geöffnetem Hauptschalter 11 entnehmbar. Ein Nebenschlüssel 13 ist Schaltschranktür 7 zugeordnet und nur mit dem Hauptschlüssel 12 entnehmbar.

Figur 2 zeigt eine schematische Darstellung eines Sicherheitssystems für den Schaltschrank 1 mit dem Gehäuse 2 mit der Wandung 3, den Seitenwänden 4, der Rückwand 5 und der oberen Deckenwandung 6 bei geöffneter Schaltschranktür 7 mit einer innen liegenden Zusatzstromversorgung 14. Der Hauptschalter 11 ist geöffnet und der Hauptstromkreis 9 mit der mehrphasigen Hauptstromversorgung 10 stromlos geschaltet. Der Hauptschlüssel 12 ist vom Hauptschalter 11 entnommen und zur Freigabe des Nebenschlüssels 13 verwendet. Mit dem Nebenschlüssel 13 ist die Schaltschranktür 7 geöffnet. Bei geöffneter Schaltschranktür 7 ist ein Kontaktschalter 15 zugänglich, so dass er manuell geschlossen werden kann. Durch diesen Schalter kann die innen liegende Elektrik 8 des Schaltschranks 1 über die Zusatzstromversorgung 14 für eine Diagnose der Funktion der elektrischen Komponenten der Ballenpresse mit einer sicheren Kleinspannung versorgt werden.

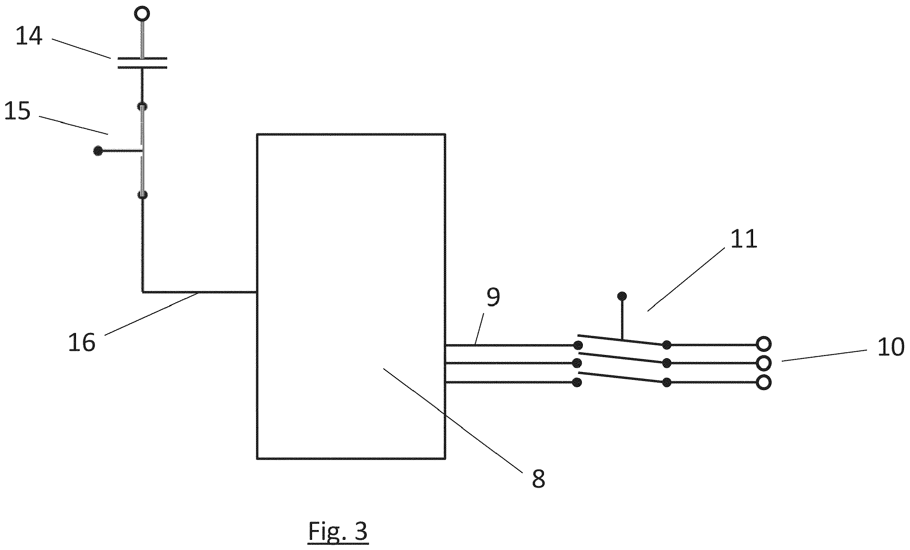

Figur 3 zeigt ein schematisches, vereinfachtes Blockschaltbild einer erfindungsgemäßen Steuerung mit der mehrphasigen Hauptstromversorgung 10 und der Zusatzstromversorgung 14 in dem Diagnosezustand. Der Hauptstromkreis 9 mit der Hauptstromversorgung 12 ist durch den geöffneten Hauptschalter 11 von der im Schaltschrank innen liegenden Elektrik und Steuerungselektronik 8 getrennt. Der Kontaktschalter 15 ist geschlossen und dadurch Zusatzstromversorgung 14 über den Zusatzstromkreis 16 mit der innen liegenden Elektrik und Steuerungselektronik 8 verbunden.

In dem Betriebszustand des Schaltschranks 1 gemäß Figur 1 mit starkem Strom ist der mehrphasige Hauptstromkreis 9 geschlossen und die Schaltschranktür 7 kann nicht geöffnet werden, da sie durch einen Verschlussmechanismus verschlossen ist. Tritt an der innen liegenden Elektrik und Steuerungselektronik 8 beispielsweise ein Störfall auf, wird zur Überführung des Schaltschranks 1 von dem Betriebs- in den Diagnosezustand durch Betätigung des Hauptschalters 11 der Hauptstromkreis 9 geöffnet und die innen liegende Elektrik und Steuerungselektronik 8 des Schaltschranks 1 stromlos geschaltet. Mit dem Hauptschlüssel 12 wird der Nebenschlüssel 13 entnommen. Mit dem Nebenschlüssel 13 wird der Verschlussmechanismus der Schaltschranktür 7 betätigt und der Schaltschrank 1 durch Öffnen der Schaltschranktür 7 geöffnet.

Wie weiter in Figur 2 gezeigt, wird bei geöffneter Schaltschranktür 7 der Kontaktschalter 15 betätigt, der einen von der Zusatzstromversorgung 14 versorgten Zusatzstromkreis 16 schließt und die im Schaltschrank 1 innen liegende Elektrik und Steuerungselektronik 8 mit einem für den Bediener gefahrlosen, schwachen Teststrom versorgt. In dem Diagnosezustand kann die im Schaltschrank 1 innen liegende Elektrik und Steuerungselektronik 8 trotz geöffneten Hauptstromkreises 9 auf ihre elektrische Funktion hin getestet werden. Wird die Schaltschranktür 7 wieder geschlossen, wird der Kontaktschalter 15 mechanisch wieder geöffnet und dadurch der Zusatzstromkreis 16 wieder stromlos geschaltet.

In Figur 3 wird zur Überführung des Schaltschranks 1 von dem Diagnosezustand in den Betriebszustand der Kontaktschalter 15 geöffnet, wodurch der Zusatzstromkreis 16 geöffnet wird und die innen liegende Elektrik und Steuerungselektronik 8 von der Zusatzstromversorgung 14 getrennt wird. Der Hauptschalter 11 wird geschlossen, wodurch die innen liegende Elektrik und Steuerungselektronik 8 über den Hauptstromkreis 9 mit der mehrphasigen Hauptstromversorgung 10 verbunden wird.

Es wird also eine technische Lösung vorgeschlagen, bei der die Elektronik oder Elektronik einer Ballenpresse ohne Aufschaltung der Hauptstromversorgung betrieben und getestet werden kann und insbesondere der Zugang zu mechanischen Teilen der Ballenpresse gefahrlos möglich ist. So können auch nach einem festgestellten Hardwaredefekt notwendige Instandsetzungsarbeiten wie zum Beispiel der Austausch eines Sensors in der Presskammer vorgenommen werden, ohne dass das Risiko besteht, dass die Presse versehentlich in Betrieb gesetzt wird.

## Patentansprüche

1. Ballenpresse mit einem Schaltschrank (1)
- mit einer Hauptstromversorgung (10),
- mit einem Hauptschalter (11) und
- mit einem Sicherheitssystem mit einem Hauptschlüssel (12),
-- wobei der Hauptschlüssel (12) dem Hauptschalter (11) zugeordnet ist und nur bei ausgeschaltetem, offenem Hauptschalter (11) und dadurch ausgeschalteter Hauptstromversorgung (10) entnehmbar ist,
**dadurch gekennzeichnet, dass** wenigstens ein nur bei eingestecktem Hauptschlüssel entnehmbarer Nebenschlüssel (13) vorgesehen ist, der zum Öffnen einer Schaltschranktür (7) erforderlich ist, so dass ein Hauptstromkreis (9) mit der Hauptstromversorgung (10) des Schaltschranks (1) vor dem Öffnen des Schaltschranks (1) unterbrochen ist, und dass über einen in dem Schaltschrank (1) vorgesehenen Kontaktschalter (15) ein Zusatzstromkreis (16) mit einer Zusatzstromversorgung (14) einschaltbar ist, der die innen liegende Elektrik und Steuerungselektronik (8) des Schaltschranks (1) mit Strom versorgt, wobei
die innen liegende Elektrik und Steuerungselektronik (8) des Schaltschranks (1) nur alternativ in einem Betriebszustand bei geschlossener Schaltschranktür (7) mit der Hauptstromversorgung (10) oder in einem Diagnosezustand bei geöffneter Schaltschranktür (7) mit der Zusatzstromversorgung (14) betrieben werden kann.

2. Ballenpresse mit einem Schaltschrank (1) nach Anspruch 1, **dadurch gekennzeichnet, dass** der Hauptstromkreis (9) mit der Hauptstromversorgung (10) und dem Hauptschalter (11) die innen liegende Elektrik und Steuerungselektronik (8) des Schaltschranks (1) in dem Betriebszustand betreibt.

3. Ballenpresse mit einem Schaltschrank (1) nach Anspruch 1 oder 2, **dadurch gekennzeichnet, dass** durch den Zusatzstromkreis (16) mit der Zusatzstromversorgung (14) und dem Kontaktschalter (15) die innen liegende Elektrik und Steuerungselektronik (8) des Schaltschranks (1) mit Strom niedriger Spannung und Stromstärke in dem Diagnosezustand betreibt.

4. Ballenpresse mit einem Schaltschrank (1) nach einem der vorhergehenden Ansprüche, **dadurch gekennzeichnet, dass** die Zusatzstromversorgung (14) eine Netzstromquelle ist.

5. Ballenpresse mit einem Schaltschrank (1) nach einem der vorhergehenden Ansprüche, **dadurch gekennzeichnet, dass** die Zusatzstromversorgung (14) eine Batterie bzw. ein Akkumulator ist.

6. Ballenpresse mit einem Schaltschrank (1) nach einem der vorhergehenden Ansprüche, **dadurch gekennzeichnet, dass** bei geschlossenem Hauptschalter (11) der Hauptschlüssel (12) nicht entnehmbar ist.

7. Ballenpresse mit einem Schaltschrank (1) nach einem der vorhergehenden Ansprüche, **dadurch gekennzeichnet, dass** bei entnommenem Hauptschlüssel (12) der Hauptschalter (11) nicht einschaltbar ist.

8. Ballenpresse mit einem Schaltschrank (1) nach einem der vorhergehenden Ansprüche, **dadurch gekennzeichnet, dass** durch Betätigung des Kontaktschalters (15) die Zusatzstromversorgung (14) ein- und ausgeschaltet wird.

9. Ballenpresse mit einem Schaltschrank (1) nach einem der vorhergehenden Ansprüche, **dadurch gekennzeichnet, dass** der Zusatzstromkreis (16) durch Schließen der Schaltschranktür (7) wieder geöffnet wird.

10. Ballenpresse mit einem Schaltschrank (1) nach einem der vorhergehenden Ansprüche, **dadurch gekennzeichnet, dass** der Kontaktschalter (15) an der inneren Oberseite des Schaltschranks (1) angebracht ist.

11. Ballenpresse mit einem Schaltschrank (1) nach einem der vorhergehenden Ansprüche, **dadurch gekennzeichnet, dass** der Betriebszustand der innen liegenden Elektrik und Steuerungselektronik (8) mit Stromversorgung durch den geschlossenen Hauptstromkreis (9) nur bei geschlossener Schaltschranktür (7) hergestellt werden kann.

12. Verfahren zum Überführen des Zustandes einer Ballenpresse mit einem Schaltschrank (1) von dem Betriebszustand in den Diagnosezustand, mit einer Ballenpresse mit einem Schaltschrank (1) nach einem der vorhergehenden Ansprüche, **dadurch gekennzeichnet, dass** nur nach dem Ausschalten des Hauptstromkreises (9) mit der Hauptstromversorgung (10) durch den Hauptschalter (11) der Hauptschlüssel (12) entnommen wird und mit dem Hauptschlüssel (12) mindestens ein Nebenschlüssel (13) entnommen wird, mit dem die Schaltschranktür (7) geöffnet wird.

13. Verfahren zum Überführen des Zustandes einer Ballenpresse mit einem Schaltschrank (1) von dem Betriebszustand in den Diagnosezustand nach Anspruch 12, **dadurch gekennzeichnet, dass** nach Öffnen des Schaltschranks (1) der Zusatzstromkreis (16) mit der Zusatzstromversorgung (14) durch den Kontaktschalter (15) eingeschaltet wird, der die innen liegende Elektrik und Steuerungselektronik (8) in dem Diagnosezustand betreibt.

## Claims

1. Baler with a switch cabinet (1)
- with a main power supply (10),
- with a main switch (11) and
- with a safety system with a main key (12),
-- wherein the main key (12) is associated with the main switch (11) and can only be removed when the main switch (11) is switched off, open and the main power supply is thereby switched off, **characterized in that** at least one secondary key (13) is provided, which can be removed only when the main key is inserted and is required for opening a switch cabinet door (7), so that a main circuit (9) with the main power supply (10) of the switch cabinet (1) is interrupted before the switch cabinet (1) is opened, and **in that** an auxiliary circuit (16) with an auxiliary power supply (14) can be switched on via a contact switch (15) provided in the switch cabinet (1), which auxiliary circuit supplies power to the internal electrics and control electronics (8) of the switch cabinet (1), wherein the internal electrics and control electronics (8) of the switch cabinet (1) can only be operated alternatively in an operating state with the switch cabinet door (7) closed with the main power supply (10) or in a diagnostic state with the switch cabinet door (7) open with the additional power supply (14).

2. Baler with a control cabinet (1) according to claim 1, **characterized in that** the main circuit (9) with the main power supply (10) and the main switch (11) operates the internal electrics and control electronics (8) of the control cabinet (1) in the operating state.

3. Baler with a control cabinet (1) according to claim 1 or 2, **characterized in that** through the auxiliary circuit (16) with the auxiliary power supply (14) and the contact switch (15) operates the internal electrics and control electronics (8) of the control cabinet (1) with current of low voltage and current intensity in the diagnostic state.

4. Baler with a control cabinet (1) according to one of the preceding claims, **characterized in that** the auxiliary power supply (14) is a mains power source.

5. Baler with a control cabinet (1) according to one of the preceding claims, **characterized in that** the auxiliary power supply (14) is a battery or accumulator.

6. Baler with a control cabinet (1) according to one of the preceding claims, **characterized in that** when the main switch (11) is closed, the main key (12) cannot be removed.

7. Baler with a control cabinet (1) according to one of the preceding claims, **characterized in that** the main switch (11) cannot be switched on when the main key (12) is removed.

8. Baler with a control cabinet (1) according to one of the preceding claims, **characterized in that** the auxiliary power supply (14) is switched on and off by actuating the contact switch (15).

9. Baler with a control cabinet (1) according to one of the preceding claims, **characterized in that** the auxiliary circuit (16) is opened again by closing the control cabinet door (7).

10. Baler with a control cabinet (1) according to one of the preceding claims, **characterized in that** the contact switch (15) is mounted on the inner upper side of the control cabinet (1).

11. Baler with a control cabinet (1) according to one of the preceding claims, **characterized in that** the operating state of the internal electrics and control electronics (8) with power supply through the closed main circuit (9) can only be established when the control cabinet door (7) is closed.

12. Method for transferring the state of a baler with a switch cabinet (1) from the operating state to the diagnostic state, with a baler with a switch cabinet (1) according to one of the preceding claims, **characterized in that** only after the main circuit (9) with the main power supply (10) has been switched off by the main switch (11) the main key (12) is removed and with the main key (12) at least one secondary key (13) is removed, with which the switch cabinet door (7) is opened.

13. Method for transferring the state of a baler with a control cabinet (1) from the operating state to the diagnostic state according to claim 12 , **characterized in that** after opening the control cabinet (1) the auxiliary circuit (16) with the auxiliary power supply (14) is switched on by the contact switch (15), which operates the internal electrics and control electronics (8) in the diagnostic state.

## Revendications

1. Presse à balles munie d'une armoire de commutation (1) comprenant
- une alimentation électrique principale (10),
- un interrupteur principal (11) et
- un système de sécurité équipé d'une clé principale (12),
-- sachant que ladite clé principale (12) est affectée à l'interrupteur principal (11) et peut être retirée uniquement à l'état ouvert et désactivé dudit interrupteur principal (11), et lorsque ladite alimentation électrique principale (10) est conséquemment désactivée, **caractérisée par** la présence d'au moins une clé auxiliaire (13) qui peut être retirée uniquement lorsque la clé principale est enfichée, et est requise pour ouvrir une porte (7) de l'armoire de commutation de façon telle qu'un circuit électrique principal (9), associé à l'alimentation électrique principale (10) de ladite armoire de commutation (1), soit interrompu avant l'ouverture de ladite armoire de commutation (1) ; et par le fait qu'un interrupteur de contact (15), prévu dans ladite armoire de commutation (1), permet d'activer un circuit électrique additionnel (16) associé à une alimentation électrique supplémentaire (14) et alimentant en courant l'appareillage électrique intérieur et l'électronique de commande (8) de ladite armoire de commutation (1),
lesquels appareillage électrique intérieur, et électronique de commande (8) de l'armoire de commutation (1) peuvent être actionnés, uniquement en mode alterné, à l'aide de l'alimentation électrique principale (10) dans un état de fonctionnement, lorsque la porte (7) de ladite armoire de commutation est fermée, ou à l'aide de l'alimentation électrique supplémentaire (14) dans un état de diagnostic, lorsque ladite porte (7) de l'armoire de commutation est ouverte.

2. Presse à balles munie d'une armoire de commutation (1), selon la revendication 1, **caractérisée par le fait que** le circuit électrique principal (9), associé à l'alimentation électrique principale (10) et à l'interrupteur principal (11), actionne l'appareillage électrique intérieur et l'électronique de commande (8) de l'armoire de commutation (1) dans l'état de fonctionnement.

3. Presse à balles munie d'une armoire de commutation (1), selon la revendication 1 ou 2, **caractérisée par le fait que**, par l'intermédiaire du circuit électrique additionnel (16) associé à l'alimentation électrique supplémentaire (14) et à l'interrupteur de contact (15), l'appareillage électrique intérieur et l'électronique de commande (8) de l'armoire de commutation (1) sont actionnés dans l'état de diagnostic avec un courant de basse tension et de faible intensité.

4. Presse à balles munie d'une armoire de commutation (1), selon l'une des revendications précédentes, **caractérisée par le fait que** l'alimentation électrique supplémentaire (14) est une source de courant de secteur.

5. Presse à balles munie d'une armoire de commutation (1), selon l'une des revendications précédentes, **caractérisée par le fait que** l'alimentation électrique supplémentaire (14) se présente, respectivement, comme une batterie ou comme un accumulateur.

6. Presse à balles munie d'une armoire de commutation (1), selon l'une des revendications précédentes, **caractérisée par le fait que** la clé principale (12) ne peut pas être retirée lorsque l'interrupteur principal (11) est fermé.

7. Presse à balles munie d'une armoire de commutation (1), selon l'une des revendications précédentes, **caractérisée par le fait que** l'interrupteur principal (11) ne peut pas être activé lorsque la clé principale (12) est retirée.

8. Presse à balles munie d'une armoire de commutation (1), selon l'une des revendications précédentes, **caractérisée par le fait que** l'alimentation électrique supplémentaire (14) est activée et désactivée par manoeuvre de l'interrupteur de contact (15).

9. Presse à balles munie d'une armoire de commutation (1), selon l'une des revendications précédentes, **caractérisée par le fait que** le circuit électrique additionnel (16) est ouvert de nouveau par fermeture de la porte (7) de l'armoire de commutation.

10. Presse à balles munie d'une armoire de commutation (1), selon l'une des revendications précédentes, **caractérisée par le fait que** l'interrupteur de contact (15) est implanté à la face supérieure interne de l'armoire de commutation (1).

11. Presse à balles munie d'une armoire de commutation (1), selon l'une des revendications précédentes, **caractérisée par le fait que** l'état de fonctionnement de l'appareillage électrique intérieur et de l'électronique de commande (8) peut être instauré, par alimentation en courant à l'aide du circuit électrique principal (9) fermé, uniquement lorsque la porte (7) de l'armoire de commutation est fermée.

12. Procédé de mutation de l'état d'une presse à balles munie d'une armoire de commutation (1), de l'état de fonctionnement à l'état de diagnostic, à l'aide d'une presse à balles munie d'une armoire de commutation (1) conformément à l'une des revendications précédentes, **caractérisé par le fait que** la clé principale (12) est retirée uniquement après que l'interrupteur principal (11) a désactivé le circuit électrique principal (9) associé à l'alimentation électrique principale (10), et au moins une clé auxiliaire (13), par laquelle la porte (7) de l'armoire de commutation (1) est ouverte, est retirée avec ladite clé principale (12).

13. Procédé conforme à la revendication 12 et dévolu à la mutation, de l'état de fonctionnement à l'état de diagnostic, de l'état d'une presse à balles munie d'une armoire de commutation (1), **caractérisé par le fait qu'**après ouverture de l'armoire de commutation (1), le circuit électrique additionnel (16), associé à l'alimentation électrique supplémentaire (14), est activé par l'intermédiaire de l'interrupteur de contact (15) qui actionne l'appareillage électrique intérieur et l'électronique de commande (8) dans l'état de diagnostic.
